# EUROPÄISCHE PATENTSCHRIFT

(11) **EP 1 476 926 B1**
(45) Veröffentlichungstag und Bekanntmachung des Hinweises auf die Patenterteilung: **14.06.2006**
(21) Anmeldenummer: 03708102.3
(22) Anmeldetag: 17.02.2003
(51) Int. Cl.: H01T 13/54, H01T 13/36

(54) **VORKAMMERZÜNDKERZE UND VERFAHREN ZUR HERSTELLUNG DERSELBEN**
PRECHAMBER SPARK PLUG AND A METHOD FOR PRODUCING THE SAME
BOUGIE D'ALLUMAGE D'UNE PRE-CHAMBRE ET SON PROCEDE DE PRODUCTION

(30) Priorität: 22.02.2002 DE 10207578
(43) Veröffentlichungstag der Anmeldung: 17.11.2004
(73) Patentinhaber: Kuhnert, Dieter, Dr., D-74889 Sinsheim (DE); Latsch, Reinhard, Dr., 76530 Baden-Baden (DE)
(72) Erfinder: Kuhnert, Dieter, Dr., D-74889 Sinsheim (DE); Latsch, Reinhard, Dr., 76530 Baden-Baden (DE)
(74) Vertreter: Mommer, Niels
(86) Internationale Anmeldenummer: PCT/EP2003/001573
(87) Internationale Veröffentlichungsnummer: WO 2003/071644

(56) Entgegenhaltungen:
- EP-A- 0 675 272
- DE-B- 1 103 080
- DE-C- 455 067
- FR-A- 548 890
- US-A- 1 662 878
- US-A- 5 918 571

## Beschreibung

Die Erfindung betrifft eine Vorkammerzündkerze für Verbrennungsmotoren gemäß der im Oberbegriff des Patentanspruchs 1 angegebenen Merkmale. Die Erfindung betrifft ferner ein Verfahren zu Herstellung einer derartigen Vorkammerzündkerze.

Eine derartige Vorkammerzündkerze ist aus der EP-A-0 675 272 bekannt. Ferner sind im SAE-Paper 840 455 solche Vorkammerzündkerzen und deren Eigenschaften beschrieben, und sie gelangen insbesondere in Gasmotoren mit Gemischaufladung zum Einsatz, wobei die Vorkammerzündkerzen besonders hohen mechanischen und thermischen Belastungen ausgesetzt sind. Derartige Vorkammerzündkerzen werden üblicherweise durch eine Modifikation üblicher Zündkerzen für Kraftfahrzeuge hergestellt.

Aus der US-A-1 662 878 ist eine übliche Zündkerze bekannt, deren beiden Teilgehäuse durch Einrasten eines unteren Endes des hinteren Teilgehäuses in eine Ringnut des vorderen Teilgehäuseü verbunden sind. Die Vorspannung der beiden Teilgehäuse ist wegbestimmt, wobei infolge fertigungsbedingter Toleranzen Probleme hinsichtlich der Reproduzierbarkeit und Einhaltung einer Vorspannung zu befürchten sind. Der Fachmann entnimmt keinen Hinweis für eine gasdichte Schweißverbindung.

Des Weiteren ist aus der DE 1 103 080 B eine übliche Zündkerze bekannt, welche zur Festlegung des Isolators im Gehäuse eine Spannmutter enthält, wobei zwischen dieser und dem Gehäuse eine Gewindeverbindung vorgesehen ist. Zur Einspannung unter vorgegebener hoher Vorspannkraft werden keine Anregungen vermittelt. Der Fachmann kann dieser Zündkerze keinen Hinweis auf eine gasdichte Verbindung oder gar eine gasdichte Schweißverbindung zwischen dem Gehäuse und der Spannmutter entnehmen, so dass durch die Gewindeverbindung bei hohen mechanischen und thermischen Belastungen Gase entweichen können.

Bei den gattungsgemäßen Vorkammerzündkerzen sind zylindrische Vorkammerformen besonders vorteilhaft, weil damit einerseits ein vergleichsweise großes Kammervolumen im Bereich des Einschraubgewindes bei einfacher Herstellung darstellbar ist und weil andererseits dadurch, dass auf der brennraumseitigen Stirnseite mindestens ein Überströmkanal tangential in die Kammer einmündet, eine wandnahe Drallströmung erzeugt werden kann, die Vorteile bei der Entflammung des Kraftstoff-Luft-Gemischs in der Kammer mit einer oder mehreren zur Zylinderwand gerichteten Funkenstrecken liefert. Diese sogenannte Wirbelkammerzündung wird insbesondere bei Gasmotoren verwendet, wobei durch einen Betrieb bei hohen Luftüberschuss (Magermotor) - insbesondere in Verbindung mit einer Turboaufladung - ein sehr niedriger Kraftstoffverbrauch und besonders geringe Schadstoffemissionen erreicht werden.

Im Zusammenhang mit der Steigerung des Drehmoments und der Leistung dieser Motoren durch höhere Verdichtung und durch immer höhere Aufladedrücke ergeben sich im Vergleich zu den Verhältnissen im Kraftfahrzeug deutlich höhere mechanische und thermische Belastungen der Vorkammerzündkerze, so dass der konstruktive Aufbau entsprechend den Zündkerzen für das Kraftfahrzeug an seine Grenzen stößt. Dabei ist die Befestigung des Isolators der Mittelelektrode im Gehäuse besonders kritisch, da dieser bei Kraftfahrzeug-Lösungen allein durch eine Bördelung am hinteren Ende der Zündkerze gehalten wird, deren mechanische Festigkeit bei kleiner Wandstärke zudem noch durch den Bördelvorgang vermindert wird. Dabei ergibt sich vor allem im Langzeitbetrieb durch die Wechselbeanspruchung als Folge des stark schwankenden Brennraumdruckes, dessen Maximalwert bis zu 200 bar betragen kann, die Gefahr, dass der Isolator nach hinten aus dem Gehäuse herausgedrückt wird.

Im Zusammenhang mit diesen extremen Anforderungen wird auch die Dauerhaltbarkeit der Befestigung der Mittelelektrode im Isolator problematisch. Hier besteht die Gefahr, dass die Mittelelektrode nach hinten aus dem Isolator herausgedrückt wird.

Ein weiteres Problem sind die bei Vorkammerzündkerzen als Folge der üblichen großen Wartungs- und Wechselintervallen auftretende Verschmutzung und Korrosion der Gewindeoberfläche, was zu einem besonders großen notwendigen Drehmoment beim Herausschrauben der Zündkerze aus dem Zylinderkopf führen kann. Im Blick auf dieses Problem ist einerseits ein besonders stabiler Aufbau des Gehäuses notwendig, wobei andererseits dafür gesorgt werden muss, dass eine ausreichende elastische Dehnung des Gehäuses in Längsrichtung bei den gegebenen Kräfteverhältnissen möglich ist, um die unterschiedlichen Ausdehnungskoeffizienten von Isolator und Gehäuse auszugleichen.

Zusammengefasst ist es die Aufgabe der vorliegenden Erfindung, die mechanischen und thermischen Eigenschaften einer Vorkammerzündkerze deutlich zu verbessern und dabei insbesondere zu gewährleisten, dass im Langzeitbetrieb eine dauerhafte und dichte Befestigung des Isolators im Gehäuse sowie der Mittelelektrode im Isolator gesichert ist. Zudem ist eine hohe Festigkeit der Anordnung, insbesondere im Blick auf ein Herausschrauben der Vorkammerzündkerze nach langer Betriebszeit notwendig. Dabei sollten unterschiedliche Varianten der Vorkammerzündkerze durch einfache Modifikation der Abmessungen herstellbar sein, wobei davon auszugehen ist, dass eine besonders hohe Qualität dadurch erreicht wird, wenn die wichtigsten Teilprozesse bei der Herstellung automatisierbar sind.

Die Lösung dieser Aufgabe erfolgt hinsichtlich der Vorkammerzündkerze gemäß der im Patentanspruch 1 angegebenen Merkmale. Hinsichtlich des Verfahrens zur Herstellung der Vorkammerzündkerze erfolgt die Lösung gemäß der im Patentanspruch 7 angegebenen Merkmale.

Die erfindungsgemäße Ausbildung der Anordnung der Vorkammerzündkerze für Verbrennungsmotoren sowie deren Herstellungsverfahren zeichnen sich vor allem dadurch aus, dass im Vergleich zu Anordnungen, die aus Modifikationen üblicher Zündkerzen für das Kraftfahrzeug abgeleitet sind, deutlich verbesserte mechanische und thermische Eigenschaften erreicht werden. Dabei erfolgt die Einspannung des Isolators im Gehäuse an Stelle einer vergleichsweise mechanisch schwachen Bördelung durch eine formstabile Verspannung zwischen festen Absätzen oder Stützflächen, die den Charakter eines Formschlusses erfüllen. Dieses wird durch einen Aufbau des Gehäuses aus mindestens zwei Teilgehäusen erreicht. Der Isolator ist mittels der beiden radial nach innen gerichteten Absätze und zwischen diesen unter vorgegebener hoher Vorspannkraft in axialer Richtung im Gehäuse eingespannt, wobei die Verspannung im Bereich der beiden Absätze im wesentlichen formstabil ist, so dass hier ein Formschluss vorgegeben ist, wobei die notwendigen elastischen Dehnungen im zylindrischen Teil des Gehäuses bereit gestellt werden und / oder von dem zwischen den formstabilen Absätzen bzw. festen Stützflächen liegenden Gehäuseteil aufgenommen werden.

Die im Gegensatz zur üblichen Praxis verwendeten zwei Teilgehäuse nehmen einerseits den vorderen bzw. hinteren Teil des Isolators mit montierter Mittelelektrode sowie metallischen Dichtringen auf und dichten andererseits durch eine gegenseitige Verspannung die zugehörigen Dichtflächen gegen die Dichtringe mit hoher Einspannkraft ab. Die Einspannkraft ist dabei im Vergleich zu der durch den hohen maximalen Brennraumdruck entstehenden Kraft sehr groß.

Die hohe Einspannkraft wird insbesondere durch die Verwendung eines Feingewindes mit geringer Steigung erreicht, wobei nach Erreichen eines Sollwerts für das Anzugsmoment und damit der Einspannkraft eine selbsthemmende Schraubverbindung entsteht. Durch eine nachfolgende Verschweißung oder Verlötung ergibt sich für die beiden Teilgehäuse eine gasdichte und in beiden möglichen Drehrichtungen mechanisch besonders hoch belastbare Verbindung. Diese ist so dimensioniert, dass sie insbesondere die hohen mechanischen Belastungen des Gehäuses im Zusammenhang mit dem Herausschrauben der Vorkammerzündkerze aus dem Zylinderkopf eines Motors auch bei größerer Verschmutzung des Einschraubgewindes aufnimmt.

Eine weitere Möglichkeit zur Herstellung einer hochfesten Verbindung mit hoher Einspannkraft ist, dass an Stelle des Gewindes eine zylindrische Passverbindung zwischen den beiden Teilgehäusen verwendet wird, wobei die beiden Teilgehäuse während einer Verschweißung mit gegeneinander gerichteter hoher Spannkraft, gegeneinander verspannt werden.

Die Befestigung der Mittelelektrode im Isolator erfolgt bei üblichen Zündkerzen durch Kraftschluss, wobei z.B. bei einem zweiteiligen Aufbau der Elektrode mit vorderem und hinteren Teil eine Glasschmelze im mittleren Bereich des Isolators verwendet wird. Auch hier besteht bei steigender mechanischer und thermischer Belastung die Gefahr, dass die Elektrode nach hinten aus dem Isolator herausgedrückt wird. Durch die bevorzugte Einführung eines Absatzes im vorderen Bereich der Mittelelektrode, mit dem sich die Mittelelektrode auf dem Isolator abstützt, wird im Langzeitbetrieb auch bei hoher mechanischer Beanspruchung durch den Brennraumdruck eine dauerhafte Befestigung der Mittelelektrode im Isolator gewährleistet.

Ein wesentlicher Teilprozess bei der Herstellung der Vorkammerzündkerze ist der Aufbau des Gehäuses aus zwei Teilgehäusen, die zunächst miteinander verschraubt und nachfolgend gasdicht miteinander verschweißt werden. Dabei weist jedes Teilgehäuse einen Absatz mit schräger Geometrie auf, zwischen denen der im wesentlichen zylinderförmige Isolator mit mindestens zwei radial nach außen gerichteten Absätzen oder Ringbunden mit ebenfalls schräger Geometrie verspannt wird, wobei jeweils ein Dichtring, insbesondere aus Kupfer oder einer Kupferlegierung zwischengefügt ist.

Während des Verspannungsvorgangs wird bei der Schraublösung vorteilhaft das Anzugsmoment gemessen und auf einen vorgegebenen Wert eingestellt. Um bei vorgegebenem Anzugsmoment und damit einer konstanten Einspannkraft einen gleichbleibenden und möglichst dünnen Spalt im Bereich der Schweißstelle zu erhalten, wird in beiden Fällen bei einem vorhergehenden Prüfvorgang eine optimale Passform durch Nacharbeit einer der an der nachfolgenden Verschweißung beteiligten Stirnseiten vorgenommen. Die Verschweißung erfolgt insbesondere mit einem Zusatzwerkstoff durch Auffüllen einer Hohlkehle; alternativ mit einem Elektronenstrahl- oder Laserverfahren, wobei in allen Fällen dadurch die thermische Belastung der Bauteile besonders niedrig gehalten wird, und die Justagewerte für die Einspannkraft nicht nennenswert verändert werden.

Besondere Weiterbildungen von Ausgestaltungen der Erfindung sind in den Unteransprüchen sowie der nachfolgenden Beschreibung bevorzugter Ausführungsbeispiele angegeben.

Die Erfindung wird anhand der in der Zeichnung dargestellten besonderen Ausführungsbeispiele näher erläutert, ohne dass insoweit eine Beschränkung erfolgt. Es zeigt:
- Fig. 1: teilweise einen axialen Längsschnitt durch die Vorkammerzündkerze,
- Fig. 2: vergrößert das Detail X gemäß Fig. 1,
- Fig. 3: eine Ausführungsform ähnlich Fig. 2, wobei die Verspannung der beiden Gehäuseteile durch Aufbringung einer äußeren Kraft vor und während der Herstellung der Schweißverbindung erfolgt.

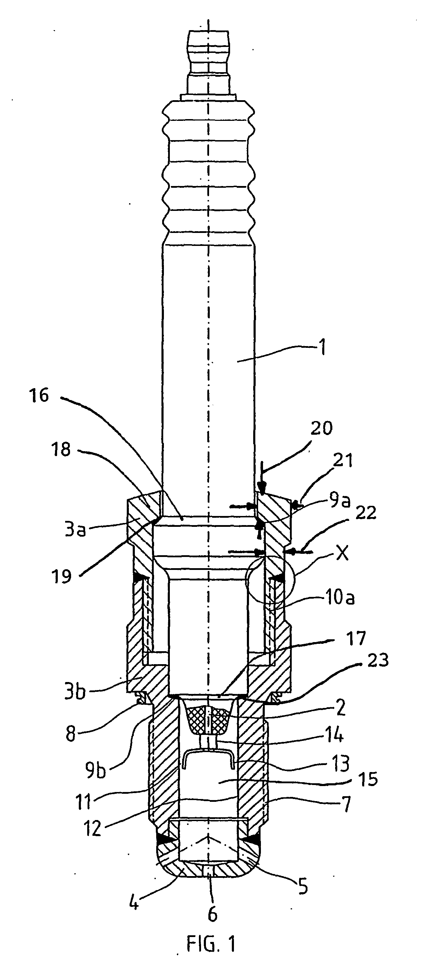

Die beispielhafte Anordnung nach Fig. 1 zeigt die Vorkammerzündkerze mit dem Isolator 1 und der darin befindlichen Mittelelektrode 2, wobei der Isolator 1 innerhalb des Gehäuses 3 verspannt angeordnet ist. Dabei besteht das Gehäuse zunächst aus zwei Teilgehäusen, d.h. einem hinteren und vorderen Teilgehäuse 3a und 3b. Auf der Unterseite des vorderen Teilgehäuses 3b ist zudem noch eine Stirnkappe 4 aus hochwarmfestem Material eingesteckt angeordnet und insbesondere durch Verschweißung am vorderen Teilgehäuse 3b befestigt.

Im Fall der Ausbildung der Vorkammerzündkerze als Wirbelkammerzündkerze befinden sich in der Stirnkappe vorzugsweise mehrere tangentiale Bohrungen 5 und eine zentrale Bohrung 6, über die der Gasaustausch zwischen der Vorkammer bzw. Wirbelkammer und dem Hauptbrennraum stattfindet.

Auf dem vorderen Teilgehäuse 3b befindet sich zudem das Einschraubgewinde 7 für die Vorkammerzündkerze, das zur Befestigung und Verspannung im Zylinderkopf des Verbrennungsmotors dient, wobei ein Dichtring 8 zur elastischen Aufnahme und Abdichtung verwendet wird.

Bei der Herstellung des Gehäuses werden das hintere und vordere Teilgehäuse 3a und 3b nach Einfügen eines hinteren Dichtringes 9a und eines vorderen Dichtringes 9b sowie des Isolators 1 gegeneinander verspannt, wobei ein Gewinde, insbesondere Feingewinde, verwendet wird, um mit einem vergleichsweise kleinen Anzugsmoment eine große axiale Einspannkraft zu erreichen, wobei die Endstellung durch ein vorgegebenes Anzugsmoment bestimmt wird oder alternativ eine Verspannung der beiden Teilgehäuse durch Aufbringen einer äußeren Kraft erfolgt, wobei die Verspannkraft gemessen wird.

Im Falle der Verschweißung der beiden Teilgehäuse 3a und 3b mit einem Elektronenstrahl- oder Laserverfahren erfolgt die Verschweißung der Stirnkappe 4 auf dem vorderen Teilgehäuse 3b vorteilhaft in einem gemeinsamen Arbeitsgang, wobei die Vorkammerzündkerze in einer Vorrichtung um die Längsachse gedreht wird. Vor diesem Verfahrensschritt und vor dem Aufstecken der Stirnkappe 4 auf das vordere Teilgehäuse werden vorteilhaft noch die Elektrodenabstände 11 der von der Mittelelektrode 2 zur Vorkammerwand 12 gerichteten Einzelelektroden 13 eingestellt.

Die Mittelelektrode 2 enthält bevorzugt einen Absatz 14, der sich in der Vorkammer 15 auf dem Isolator abstützt. Der Absatz 14 weit einen im Vergleich mit der Mittelelektrode 2 um einen vorgegebenen Betrag größeren Durchmesser auf. Dieser Absatz 14 kann sowohl im Zusammenhang mit der Herstellung der Mittelelektrode 2 selbst, aber auch durch das Aufschieben und Verschweißen eines Ringes dargestellt werden. Durch diesen wird ein Einschieben der Mittelelektrode 2 in den Isolator 1 durch hohe Brennraumdrücke verhindert.

Der Isolator 1 weist innerhalb des hinteren Teilgehäuses 3a einen hinteren Absatz oder Ringbund 16 und axial beabstandet zu diesem im Bereich des vorderen Teilgehäuses 3b einen vorderen Absatz oder Ringsbund 17 auf. Die Absätze oder Ringbunde 16, 17 sind radial nach außen gerichtet und dienen zur axialen Festlegung des Isolators 1 im Inneren der beiden unter gegenseitiger Vorspannung fest und gasdicht verbundenen Teilgehäusen 3a, 3b. Das hintere Teilgehäuse 3a besitzt einen radial nach innen gerichteten Ringbund 18 mit einer dem hinteren Absatz 16 zugewandten hinteren Stützfläche 19, welche eine feste Abstützung und Auflagerung des Isolators 1 bzw. dessen hinteren Absatz 16 gewährleistet. Der Ringbund 18 besitzt in axialer Richtung eine Wanddicke 20, welche derart vorgegeben ist, dass eine feste und / oder formstabile Abstützung des Isolators bei den auftretenden hohen Brennraumdrücken sicher gestellt ist. Der an den Ringbund 18 radial und axial in Richtung zur Vorkammer 15 anschließende Bereich des hinteren Teilgehäuses 3a weist ebenso wie der Ringbund 18 eine vergleichsweise große radiale Wanddicke 21 auf, so dass eine formstabile Abstützung des Isolators 1 bzw. dessen hinteren Absatzes 16 gewährleistet ist und auch bei sehr hohen Brennraumdrücken eine Deformation oder ein Aufbiegen mit hoher Funktionssicherheit vermieden wird. Der axial an den derart formstabil ausgebildeten Stützbereich des hinteren Teilgehäuses 3a anschließende Bereich des hinteren Teilgehäuses 3a kann bevorzugt eine reduzierte Wanddicke 22 aufweisen. Der axial zwischen den radial nach innen gerichteten Absätzen des Gehäuses 1 bzw. den Stützflächen 19, 23 liegende, bevorzugt im wesentlichen zylindrische Bereich des Gehäuses ist derart dimensioniert, dass die notwendigen elastischen Dehnungen aufgenommen und / oder bereit gestellt werden. Wie ersichtlich, sind die hintere Stützfläche 19 und der zugeordnete hintere Absatz 16 in vorteilhafter Weise konisch ausgebildet, wobei die Konusspitzen auf der von der Vorkammer 15 abgewandten Seite liegen. Des Weiteren sei festgehalten, dass zwischen dem hinteren Absatz 16 und der hinteren Stützfläche 19 in vorteilhafter Weise der bereits erwähnte hintere Dichtring 9a angeordnet ist. Ferner weist das vordere Teilgehäuse 3b eine vordere Stützfläche 23 auf, an welcher der vordere Absatz 17 des Isolators 1, insbesondere über den vorderen Dichtring 9b, abgestützt ist. Der axial zwischen der hinteren Stützfläche 19 und der vorderen Stützfläche 23 vorhandene Bereich des Gehäuses bzw. des hinteren Teilgehäuses 3a und des vorderen Teilgehäuses 3b ist derart ausgebildet, dass die elastischen Dehnungen, insbesondere infolge von Druck- und / oder Temperaturänderungen, funktionssicher aufgenommen bzw. aufgenommen werden.

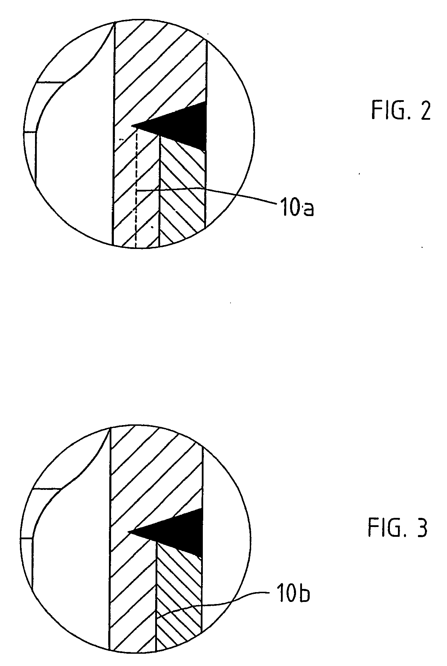

Fig. 2 zeigt gemäß Fig. 1, Detail X, die Lösung, bei der die Verspannung der beiden Teilgehäuse 3a und 3b durch eine Verschraubung 10a und die Verschweißung ohne Zusatzwerkstoff erfolgt, wobei das Schmelzgut durch die beiden Teilgehäuse bereit gestellt wird.

Fig.3 zeigt die Lösung, bei der die Verspannung der beiden Teilgehäuse 3a und 3b durch eine äußere Kraft erfolgt, wobei eine zylindrische Passverbindung 10b zwischen den beiden Teilgehäusen verwendet wird und die Verschweißung mit Zusatzwerkstoff erfolgt, wobei eine Hohlkehle aufgefüllt wird. Gemäß dieser Ausführungsform erfolgt die Verspannung des Isolators bei der Herstellung mittels einer Aufnahmevorrichtung, insbesondere eines Schweißautomaten, wobei die derart aufgebrachte äußere Kraft während der Verschweißung und / oder während der Ausführung der Schweißnaht aufrecht erhalten bleibt.

### Bezugszeichen

- 1: Isolator
- 2: Mittelelektrode
- 3a: hinteres Teilgehäuse
- 3b: vorderes Teilgehäuse
- 4: Stirnkappe
- 5: tangentiale Bohrung in 4
- 6: zentrale Bohrung in 4
- 7: Einschraubgewinde
- 8: Dichtring
- 9a: hinterer Dichtring
- 9b: vorderer Dichtring
- 10: Gewindeverbindung / Feingewinde
- 11: Elektrodenabstand
- 12: Vorkammerwand
- 13: Einzelelektrode
- 14: Absatz von 2
- 15: Vorkammer
- 16: hinterer Ringbund / Absatz von 1
- 17: vorderer Ringbund / Absatz von 1
- 18: Ringbund von 3a
- 19: hintere Stützfläche
- 20: axiale Wanddicke von 18
- 21: radiale Wanddicke im Bereich von 18
- 22: reduzierte Wanddicke von 3a
- 23: vordere Stützfläche von 3b

## Patentansprüche

1. Vorkammerzündkerze mit einem Gehäuse (3), mit einem Isolator (1) mit innenliegender Mittelelektrode (2), mit einer Vorkammer (15) im vorderen Gehäusebereich mit mindestens einem Überströmkanal zum Brennraum eines Verbrennungsmotors sowie mit einer Einrichtung zur Ausbildung einer Funkenstrecke, im Wesentlichen innerhalb der Vorkammer (15), insbesondere enthaltend eine Mittelelektrode (2) und mindestens eine weitere, an der Mittelelektrode befestigte und zur Zylinderwand (12) hin gerichtete Elektrode (13), wobei der Isolator (1) zur Befestigung im Gehäuse (3) zwischen mindestens einem vorderen und einem hinteren Absatz (19, 23) verspannt ist,
**dadurch gekennzeichnet, dass** das Gehäuse aus mindestens zwei Teilgehäusen (3a, 3b) besteht, welche den hinteren Absatz (19) bzw. den vorderen Absatz (23) aufweisen, dass zwischen den Teilgehäusen (3a, 3b) eine Gewindeverbindung (10a) oder eine zylindrische Paßverbindung (10b) und ferner eine feste und gasdichte Schweißverbindung vorgesehen sind, und dass der Isolator (1) zwei Ringbunde (16, 17) aufweist, über welche dieser zwischen den Absätzen (19, 23) im Gehäuse (3) unter vorgegebener hoher Vorspannkraft in axialer Richtung eingespannt ist, wobei die Verspannung im Bereich der Absätze (19, 23) im Wesentlichen formstabil ist, so dass hier ein Formschluss vorliegt, wobei die notwendigen elastischen Dehnungen in dem im Wesentlichen zylindrischen Teil des Gehäuses bereit gestellt werden.

2. Vorkammerzündkerze nach Anspruch 1, **dadurch gekennzeichnet, dass** zwischen den Absätzen (19, 23) der beiden Teilgehäuse (3a, 3b) der im wesentlichen zylinderförmige Isolator (1) mit den zwei Ringbunden (16, 17) verspannt ist.

3. Vorkammerzündkerze nach Anspruch 1 oder 2, **dadurch gekennzeichnet, dass** in der Gewindeverbindung das hintere Teilgehäuse (3a) ein Innengewinde und das vordere Teilgehäuse (3b) ein Außengewinde besitzt.

4. Vorkammerzündkerze nach einem der Ansprüche 1 bis 3, **dadurch gekennzeichnet, dass** mindestens einer der Absätze (19, 23) eine schräge und / oder konische Geometrie aufweist, welche zumindest näherungsweise der schrägen Geometrie des jeweils zugeordneten Ringbundes (16, 17) entspricht.

5. Vorkammerzündkerze nach einem der Ansprüche 1 bis 4, **dadurch gekennzeichnet, dass** mindestens an einem der Absätze (19, 23), insbesondere mit schräger Geometrie, ein Dichtring (9a, 9b) zwischen dem Absatz (19, 23) und Isolator (1) angeordnet ist.

6. Vorkammerzündkerze nach einem der Ansprüche 1 bis 5, **dadurch gekennzeichnet, dass** die Mittelelektrode (2) im vorderen Bereich, insbesondere in der Vorkammer (15), einen Absatz (14) aufweist, welcher auf der Stirnseite des Isolators (1) abgestützt ist und / oder welcher einen größeren Durchmesser aufweist, als die im Isolator (1) angeordnete Mittelelektrode (2).

7. Verfahren zur Herstellung einer Vorkammerzündkerze mit einem Gehäuse (3), mit einem Isolator (1), mit einer innenliegenden Mittelelektrode (2) sowie mit einer Vorkammer (15) im vorderen Gehäusebereich, mit mindestens einem Überströmkanal zum Brennraum eines Verbrennungsmotors sowie mit einer Einrichtung zur Ausbildung einer Funkenstrecke, im wesentlichen innerhalb der Vorkammer (15), insbesondere enthaltend eine Mittelelektrode (2) und mindestens eine weitere, an der Mittelelektrode (2) befestigte und zur Zylinderwand (12) hin gerichtete Elektrode (13), wobei zur Befestigung der Isolator (1) im Gehäuse (3) zwischen mindestens einem vorderen und einem hinteren Absatz (19, 23) verspannt wird,
**dadurch gekennzeichnet, dass** das Gehäuse (3) aus einem hinteren Teilgehäuse (3a) und einem vorderen Teilgehäuse (3b) zusammengesetzt wird, wobei das hintere Teilgehäuse (3a) einen radial nach innen gerichteten formstabilen hinteren Absatz (19) aufweist, dass dieser hintere Absatz (19) an einem hinteren Ringbund (16) des Isolators (1) zur Anlage gebracht wird, dass die beiden Gehäuseteile (3a, 3b) axial gegeneinander mittels einer Gewindeverbindung (10a) oder über eine zylindrische Paßverbindung (10b) mittels einer Aufnahmevorrichtung derart verspannt werden, dass der im Bereich des Gehäuses befindliche Teil des Isolators (1) unter vorgegebener hoher axialer Vorspannkraft zwischen dem hinteren Absatz (19) und dem vorderen Absatz (23) der beiden Teilgehäuse (3a, 3b) eingespannt ist, und dass nachfolgend unter Beibehaltung der Vorspannung die beiden Gehäuseteile (3a, 3b) durch Verschweißen fest und gasdicht miteinander verbunden werden.

8. Verfahren nach Anspruch 7, **dadurch gekennzeichnet, dass** für die Gewindeverbindung (10a) ein Feingewinde verwendet wird.

9. Verfahren nach Anspruch 7 oder 8, **dadurch gekennzeichnet, dass** das Verschweißen der beiden Teilgehäuse (3a, 3b) mit einem Schmelzschweißverfahren erfolgt, wobei das Schmelzgut durch die beiden Teilgehäuse bereit gestellt wird und ein Verschmelzvorgang im Bereich der Schweißnaht erfolgt.

10. Verfahren nach Anspruch 7 oder 8, **dadurch gekennzeichnet, dass** das Verschweißen der beiden Teilgehäuse (3a, 3b) mit einem Schmelzschweißverfahren erfolgt, wobei das Schmelzgut durch Fremdmaterial bereit gestellt wird und eine Hohlkehle aufgefüllt wird.

11. Verfahren nach Anspruch 7 oder 8, **dadurch gekennzeichnet, dass** das Verschweißen der beiden Teilgehäuse (3a, 3b) mit einem Mikroschweißverfahren, insbesondere Laser- oder Elektronenstrahlverfahren, durchgeführt wird.

12. Verfahren nach Anspruch 7, **dadurch gekennzeichnet, dass** die Verspannung des Isolators (1) in einer Aufnahmevorrichtung eines Schweißautomaten durchgeführt wird und während des Verschweißens beibehalten wird, wobei nach dem Ausführen der Schweißnaht über diese die Verspannung im Wesentlichen unverändert erhalten wird.

13. Verfahren nach einem der Ansprüche 7 bis 12, **dadurch gekennzeichnet, dass** mit diesem eine Vorkammerzündkerze nach einem der Ansprüche 1 bis 6 hergestellt wird.

## Claims

1. Prechamber spark plug comprising a shell (3), an insulator (1) with a central electrode (2) located therein, a prechamber (15) in the front shell area with at least one transfer passage to the combustion chamber of an internal combustion engine and a device for producing a spark gap, substantially within the prechamber (15), particularly comprising a central electrode (2) and at least one further electrode (13) fixed to the central electrode and oriented towards the cylinder wall (12), whereby the insulator (1) is braced between at least a front and a rear shoulder (19, 23) for fixing in the shell (3),
**characterised in that** the shell comprises at least two partial shells (3a, 3b), which comprise the rear shoulder (19) and front shoulder (23), respectively, that a threaded connection (10a) or a cylindrical mating connection (10b) and, furthermore, a fixed and gastight welded joint are provided between the partial shells (3a, 3b), and that the insulator (1) comprises two ring collars (16, 17) by means of which the insulator (1) is clamped in the axial direction between the shoulders (19, 23) in the shell (3) under a specified high preloading force, whereby the stay in the area of the shoulders (19, 23) is substantially dimensionally stable such that positive locking is achieved here, whereby the required elastic expansions are provided in the substantially cylindrical portion of the shell.

2. Prechamber spark plug according to claim 1, **characterised in that** the substantially cylindrical insulator (1) is braced with the two ring collars (16, 17) between the shoulders (19, 23) of the two partial shells (3a, 3b).

3. Prechamber spark plug according to claim 1 or 2, **characterised in that**, within the threaded connection, the rear partial shell (3a) comprises an internal thread and the front partial shell (3b) comprises an external thread.

4. Prechamber spark plug according to one of claims 1 to 3, **characterised in that** at least one of shoulders (19, 23) has an oblique and/or conical geometry, which at least approximately corresponds to the oblique geometry of the respective ring collar (16, 17).

5. Prechamber spark plug according to one of claims 1 to 4, **characterised in that** a sealing ring (9a, 9b) is arranged between the shoulder (19, 23) and the insulator (1) at least at one of shoulders (19, 23), particularly with oblique geometry.

6. Prechamber spark plug according to one of claims 1 to 5, **characterised in that** the central electrode (2) comprises a shoulder (14) in the front area, particularly in the prechamber (15), said shoulder (14) being supported on the face of the insulator (1) and/or having a larger diameter than the central electrode (2) arranged in the insulator (1).

7. Method of producing a prechamber spark plug comprising a shell (3), an insulator (1) with a central electrode (2) located therein, a prechamber (15) in the front shell area with at least one transfer passage to the combustion chamber of an internal combustion engine and a device for producing a spark gap, substantially within the prechamber (15), particularly comprising a central electrode (2) and at least one further electrode (13) fixed to the central electrode (2) and oriented towards the cylinder wall (12), whereby the insulator (1) is braced between at least a front and a rear shoulder (19, 23) for fixing in the shell (3),
**characterised in that** the shell (3) comprises a rear partial shell (3a) and a front partial shell (3b), whereby the rear partial shell (3a) comprises a radially inward oriented, dimensionally stable rear shoulder (19), that said rear shoulder (19) is brought into contact with a rear ring collar (16) of the insulator (1), that the two partial shells (3a, 3b) are axially braced against each other by means of a threaded connection (10a) or a cylindrical mating connection (10b) using a receiving device such that the portion of the insulator (1) in the area of the shell is clamped between the rear shoulder (19) and the front shoulder (23) of the two partial shells (3a, 3b) under a specified high axial preloading force, and that subsequently the two partial shells (3a, 3b) are fixedly connected in a gastight manner by welding while maintaining the preload.

8. Method according to claim 7, **characterised in that** a fine thread is used for the threaded connection (10a).

9. Method according to claim 7 or 8, **characterised in that** the two partial shells (3a, 3b) are welded using a fusion welding method, whereby the molten material is provided by the two partial shells and a fusion process is performed in the area of the weld seam.

10. Method according to claim 7 or 8, **characterised in that** the two partial shells (3a, 3b) are welded using a fusion welding method, whereby the molten material is provided by means of outside materials and a groove is filled.

11. Method according to claim 7 or 8, **characterised in that** the two partial shells (3a, 3b) are welded using a micro-welding method, particularly a laser or electron beam method.

12. Method according to claim 7, **characterised in that** the insulator (1) is braced in a receiving device of a welding machine and is maintained during welding, whereby bracing is substantially retained by these means after producing the weld seam.

13. Method according to one of claims 7 to 12, **characterised in that** it is used to produce a prechamber spark plug according to one of claims 1 to 6.

## Revendications

1. Bougie d'allumage d'une pré-chambre avec un culot (3), avec un isolateur (1) avec à l'intérieur une électrode centrale (2), avec une pré-chambre (15) dans la zone avant du culot avec au moins un canal de passage vers la chambre de combustion d'un moteur à combustion, ainsi qu'avec un dispositif destiné à la formation d'un parcours de l'étincelle, pour l'essentiel à l'intérieur de la pré-chambre (15), en particulier contenant une électrode centrale (2) et au moins une autre électrode (13) fixée sur l'électrode centrale et dirigée vers la paroi de cylindre (12), l'isolateur (1) étant compressé entre au moins une saillie avant et une saillie arrière (19,23) destinée à la fixation dans le culot (3),
**caractérisée en ce que** le culot est constitué par au moins deux culots partiels (3a, 3b), lesquels présentent la saillie arrière (19) et la saillie avant (23), que entre les culots partiels (3a, 3b) sont prévus un assemblage par filetage (10a) ou un raccord d'assemblage cylindrique (10b) et de plus un assemblage par soudage solide et étanche aux gaz, et que l'isolateur (1) présente deux collets (16, 17) par lesquels ce dernier est maintenu serré entre les saillies (19, 23) dans le culot (3), dans le sens axial avec une force de précontrainte élevée définie, la compression dans la zone des saillies (19, 23) étant pour l'essentiel indéformable de sorte qu'il existe une prise directe, les extensions élastiques nécessaires dans la partie pour l'essentiel cylindrique du culot étant mises à disposition.

2. Bougie d'allumage d'une pré-chambre selon la revendication 1, **caractérisée en ce que**, entre les saillies (19, 23) des deux culots partiels (3a, 3b) l'isolateur (1) pour l'essentiel cylindrique est compressé avec les deux collets (16, 17).

3. Bougie d'allumage d'une pré-chambre selon la revendication 1 ou 2, **caractérisée en ce que** dans l'assemblage par filetage, le culot partiel arrière (3a) possède un filet de vis intérieur et le culot partiel avant (3b) un filet extérieur.

4. Bougie d'allumage d'une pré-chambre selon l'une des revendications 1 à 3, **caractérisée en ce qu'**au moins l'une des saillies (19, 23) présente une géométrie oblique et/ou cônique, laquelle correspond au moins approximativement à la géométrie oblique du collet (16, 17) respectivement assorti.

5. Bougie d'allumage d'une pré-chambre selon l'une des revendications 1 à 4, **caractérisée en ce que** sur au moins l'une des saillies (19, 23), en particulier à géométrie oblique, une bague d'étanchéité (9a, 9b) est disposée entre la saillie (19, 23) et l'isolateur (1).

6. Bougie d'allumage d'une pré-chambre selon l'une des revendications 1 à 5, **caractérisée en ce que** l'électrode centrale (2) dans la zone avant, en particulier dans la pré-chambre (15) présente une partie en saillie (14), laquelle est appuyée sur l'embout avant de l'isolateur (1) et présente un diamètre plus grand que l'électrode centrale (2) disposée dans l'isolateur (1).

7. Procédé de production d'une bougie d'allumage d'une pré-chambre avec un culot (3), avec un isolateur (1) avec à l'intérieur une électrode centrale (2), ainsi qu'avec une pré-chambre (15) dans la zone avant du culot, avec au moins un canal de passage vers la chambre de combustion d'un moteur à combustion, ainsi qu'avec un dispositif pour la formation d'un parcours de l'étincelle, pour l'essentiel à l'intérieur de la pré-chambre (15), en particulier contenant une électrode centrale (2) et au moins une autre électrode (13) fixée à l'électrode centrale (2) et dirigée vers la paroi de cylindre (12), l'isolateur (1) étant compressé pour la fixation dans le culot (3), entre une saillie avant et une saillie arrière (19, 23),
**caractérisé en ce que** le culot (3) est constitué par un culot partiel arrière (3a) et un culot partiel avant (3b), le culot partiel arrière (3a) présentant une saillie arrière indéformable dirigée radialement vers l'intérieur, que cette saillie arrière (19) est amenée à prendre appui contre le collet arrière (16) de l'isolateur (1), que les deux parties de culot (3a, 3b) sont compressées l'une contre l'autre dans le sens axial au moyen d'un assemblage par filetage (10a) ou par un raccord d'assemblage cylindrique (10b) moyennant un dispositif de logement, de façon telle que la partie de l'isolateur (1) se trouvant dans la zone du culot est compressée avec une force de pré-contrainte axiale élevée définie, entre la saillie arrière (19) et la saillie avant (23) des deux culots partiels (3a, 3b), et qu'ensuite, tout en maintenant la précontrainte, les deux parties de culot (3a, 3b) sont solidement reliées l'une à l'autre par soudage, de façon imperméable aux gaz.

8. Procédé selon la revendication 7, **caractérisé en ce que** pour l'assemblage par filetage (10a), un filetage à pas fin est utilisé.

9. Procédé selon la revendiction 7 ou 8, **caractérisé en ce que** le soudage des deux parties de culot (3a, 3b) s'effectue par un procédé de soudage par fusion, la matière à fondre à travers les deux parties de culot étant donnée et le procédé de soudage étant exécuté dans la zone du raccord de soudure.

10. Procédé selon la revendiction 7 ou 8, **caractérisé en ce que** le soudage des deux parties de culot (3a, 3b) s'effectue avec un procédé de soudage par fusion, la matière à fondre étant donnée par une matière tierce avec laquelle une moulure creuse est remplie.

11. Procédé selon la revendication 7 ou 8, **caractérisé en ce que** le soudage des deux culots partiels (3a, 3b) est effectué par un procédé de microsoudure, en particulier un procédé par laser ou à faisceau électronique.

12. Procédé selon la revendication 7, **caractérisé en ce que** la compression de l'isolateur (1) est effectuée dans le dispositif de logement d'une soudeuse automatique et est maintenue pendant le soudage, la compression demeurant pour l'essentiel inchangée après l'exécution du raccord de soudure par le biais du dispositif de logement.

13. Procédé selon l'une des revendications 7 à 12, **caractérisé en ce qu'**une bougie d'allumage d'une pré-chambre selon l'une des revendications 1 à 6 est fabriquée avec ledit procédé.
